# FASCICULE DE BREVET EUROPEEN

(11) **EP 0 637 798 B1**
(45) Date de publication et mention de la délivrance du brevet: **27.10.1999**
(21) Numéro de dépôt: 94401755.7
(22) Date de dépôt: 29.07.1994
(51) Int. Cl.: G06F 9/46

(54) **Procédé d'analyse d'interblocage dans un système d'exploitation**
Verklemmungsanalyseverfahren in einem Betriebssystem
Deadlock analysis method in an operating system

(30) Priorité: 03.08.1993 FR 9309533
(43) Date de publication de la demande: 08.02.1995
(73) Titulaire: BULL S.A., 92800 Puteaux (FR)
(72) Inventeur: Jacquin, Thierry, F-38130 Echirolles (FR); Dubourreau, Jean-Paul, F-38330 Biviers (FR)

(56) Documents cités:
- WO-A-89/00734
- ACM TRANSACTIONS ON COMPUTER SYSTEMS., vol.4, no.4, Novembre 1986, NEW YORK US pages 320 - 327 D.Z. BADAL 'The distributed deadlock detection algorithm'
- 13TH ACM SYMP. ON OPERATING SYSTEM PRINCIPLES, 13 Octobre 1991, NEW YORK, ACM, US pages 95 - 109, XP313824 THOMAS E. ANDERSON ET AL. 'Scheduler activations: effective kernel support for the user-level management of parallelism'
- 17TH MINI-G.U.I.D.E CONFERENCE, 23 Novembre 1988, G.U.I.D.E., EBIKON, SWITZERLAND pages 528 - 532 ORY CHAZAN 'Debugging tools for the MVS/XA environment'
- IBM TECHNICAL DISCLOSURE BULLETIN., vol.22, no.11, Avril 1980, NEW YORK US pages 5078 - 5079 R.L. OBERMARCK 'Deadlock detection for all resource classes'

## Description

La présente invention concerne un procédé d'analyse d'interblocages dans un système d'exploitation d'une machine consistant à rechercher pour toute unité d'exécution (appelée par l'homme du métier "thread") bloquée sur un verrou (appelé également par l'homme du métier "lock"), l'unité d'exécution qui détient ce verrou et lorsque cette unité d'exécution est elle-même en attente sur un autre verrou de remonter la chaîne jusqu'à trouver un cycle.

Un tel procédé d'analyse d'interblocages est habituellement utilisé et ce procédé traditionnel est par exemple décrit dans "Modern Operating Systems", Tanenbaum 1992 (Prentice-Hall International Editions).

Pour résoudre les problèmes d'interblocage la théorie des graphes est utilisée et le présent ouvrage propose une modélisation dans laquelle le graphe de dépendance d'un système est constitué de deux familles de noeuds : les processus et les ressources que nous transposerons pour s'adapter à notre application en des verrous et des unités d'exécution connectés au moyen d'arcs selon la sémantique suivante. Un arc connectant une unité d'exécution à un verrou signifie que l'unité d'exécution est bloquée en attente de ce verrou. A l'inverse, un arc connectant un verrou à une unité d'exécution signifie que l'unité d'exécution détient ce verrou qui lui est donc temporairement affecté. Ainsi, si une unité d'exécution T1 est en attente d'un verrou L1 qui est alors détenu par une unité d'exécution T2 qui ne peut relâcher ce verrou L1 car l'unité T2 est elle-même en attente d'un verrou L2 détenu par l'unité T1, un cycle est formé dans le graphe et les deux unités d'exécution T1 et T2 sont irrémédiablement bloquées, il y a interblocage. Dans le présent exemple le cycle formé dans le graphe est le suivant : T1 → L1 → T2 → L2 → T1.

Ce type de procédé peut donner des résultats satisfaisants lorsqu'il est appliqué à l'analyse d'interblocages dans un système d'exploitation d'une machine comportant un seul processeur, mais il montre ses limites et ne peut donc être efficacement utilisé avec un système d'exploitation d'une machine comportant un multiprocesseur symétrique et ceci d'autant plus quand la machine fonctionne dans un environnement UNIX (marque déposée par UNIX System Laboratories Inc.). En effet, pour des raisons de performances, un système d'exploitation de ce type favorise l'utilisation de verrous "actifs", c'est-à-dire de verrous qui lorsqu'ils sont rencontrés engendrent une attente active. Cette attente active est de manière habituelle justifiée pour le cas de figure dans lequel un verrou n'est pas libre mais dont le détenteur dudit verrou est actif sur un autre processeur. Dans un tel cas, ne pas attendre activement un verrou qui a une très forte probabilité d'être assez rapidement libéré, serait préjudiciable. En outre, les traitants d'exception ou d'interruption n'ayant pas leur propre contexte d'exécution, ne peuvent être autorisés à s'endormir dans l'attente d'un verrou et doivent par conséquent attendre également de manière active. Ceci peut conduire à un empilement d'attentes actives sur un processeur, car une unité d'exécution qui est en attente active sur un verrou peut de plus être interrompue alors que le traitant d'interruption lui-même peut attendre activement un verrou.

Dans la recherche d'interblocage passant par l'analyse d'une telle situation, le verrou bloquant l'unité d'exécution n'est pas celui qui a provoqué son attente (et qui de plus, a pu être libéré depuis), mais celui attendu par le traitant d'interruption.

Il peut, de plus, arriver qu'un traitant d'interruption soit lui-même interrompu pour une raison de priorité supérieure, et ceci ainsi de suite, aboutissant à un empilement pouvant alors atteindre plusieurs étages. Si dans cet empilement de traitants d'interruption, plusieurs sont en attente d'un verrou, le verrou bloquant l'unité d'exécution est celui attendu par le traitant d'interruption de plus haute priorité. Dans un tel cas, le procédé traditionnel ne permet pas de constituer le graphe réel de dépendances, et en particulier, de définir de manière fiable les arcs allant des noeuds de type unité d'exécution vers les noeuds de type verrou.

La présente invention propose un procédé d'analyse d'interblocages qui ne présente pas les limites et donc les inconvénients du procédé connu et en particulier lorsqu'il est utilisé avec un système d'exploitation d'une machine comportant un multiprocesseur symétrique et fonctionnant dans un environnement UNIX.

Ce but est atteint par le fait que le procédé d'analyse d'interblocages dans un système d'exploitation d'une machine comportant un ensemble de processeurs formant un multiprocesseur symétrique exécutant un programme dans un environnement UNIX, chacun des processeurs exécutant une fraction de séquence d'instruction de programme constituant une unité d'exécution, est caractérisé en ce qu'il exécute de manière itérative une fonction spécifique pour établir au moins un arc d'un graphe de dépendance connectant une unité d'exécution d'un des processeurs du multiprocesseur symétrique à tout type de verrou, et en ce qu'il comporte :
- une recherche et une identification sur tous les processeurs du multiprocesseur symétrique d'une unité d'exécution en attente bloquée sur un verrou ou attendant un signal détenteur d'un élément de la machine,
- une recherche et identification de l'unité d'exécution détentrice qui détient le verrou ou le signal détenteur de l'élément de la machine, et
- lorsque l'unité d'exécution détentrice est elle-même en attente sur un autre verrou, répétition des étapes précédentes du procédé à travers une chaîne d'arc reliant entre eux les unités d'exécution et les verrous pour remonter la chaîne de dépendance, jusqu'à ce qu'un cycle soit identifié, étapes dans lesquelles la fonction spécifique permet de reconstituer élément par élément un interblocage et donc un cycle de dépendance.
D'autres particularités du premier but de l'invention sont obtenues par les caractéristiques des revendications 2 à 4.
Un autre but de l'invention est une utilisation du procédé. Cet autre but est atteint par les caractéristiques des revendications 5 à 8.

Ainsi grâce au procédé selon l'invention, un interblocage peut être efficacement analysé même dans le cas d'un système d'exploitation gérant un multiprocesseur symétrique et fonctionnant dans un environnement UNIX. En effet, le processeur exécutant l'unité d'exécution concernée est ainsi connu, l'ensemble des unités d'exécution va être parcouru et des éléments du cycle seront extraits unité d'exécution par unité d'exécution jusqu'à reconstituer un cycle et sortir un état complet qui peut être exploité par l'utilisateur et ceci pour tout type de verrou : en attente active ou passive. L'application d'un tel procédé permet de rendre l'utilisateur complètement indépendant du mécanisme interne des verrous. De plus, le traitement de l'information existante, c'est-à-dire de l'information présente et directement accessible en mémoire, est totalement automatisé, ce qui présente un autre important avantage relativement au procédé traditionnel dont l'application était manuelle et par conséquent en fonction des difficultés pouvait être excessivement longue et rebutante ou tout simplement ne pas aboutir à la moindre information manquante.

Avec tout outil de mise au point sont fournies les primitives de base qui permettent d'aller voir ce qu'exécute une unité d'exécution ou un processeur et savoir dans quel état est un verrou, un utilisateur peut donc utiliser de manière générale le procédé traditionnel ou le présent procédé. Cependant, le présent procédé employé dans son principe va à l'encontre de la technique traditionnelle, car la démarche naturelle est de faire correspondre une unité d'exécution à un verrou sans se préoccuper de l'état des processeurs et sans aller vérifier comment les unités d'exécution ont été interrompues ni tenir compte des priorités de recherche.

Se dégage également un autre aspect intéressant. Au-delà de l'interblocage lié aux verrous, une unité d'exécution peut être parfois interrompue dans l'attente d'un événement qui peut être l'attente d'une ressource différente du système, ceci apparaît dans la chaîne d'éléments constituant l'interblocage et donc permet d'expliquer toute attente pour quelque raison que ce soit.

De même, le procédé traditionnel peut s'avérer inefficace pour analyser un interblocage dans un système d'exploitation à mémoire virtuelle. En effet, seules les informations présentes en mémoire physique sont directement utilisables pour rechercher un cycle, toute information permettant la détection d'un cycle qui n'est pas en mémoire physique empêchant alors de retrouver ledit cycle. Cela signifie donc qu'il n'est pas disposé d'un graphe complet, certains arcs et certains noeuds pouvant dans ce cas de figure ne pas être repérés en mémoire physique.

Un autre but de la présente invention consiste à fournir une solution efficace aux problèmes posés au procédé traditionnel lorsqu'il est utilisé une mémoire virtuelle par le système et que par conséquent toutes les informations utiles ne se trouvent pas obligatoirement en mémoire physique.

Pour cela, le présent procédé est remarquable en ce que, après avoir détecté l'ensemble des chaînes de dépendances entre verrous et unités d'exécution, les informations relatives à la pile d'exécution de chaque unité d'exécution sont également délivrées, ces informations autorisant alors l'utilisateur à agencer l'ensemble des chaînes de manière à reconstituer le cycle déterminant l'interblocage.

Ainsi, pour donner la possibilité à l'utilisateur de résoudre ce problème d'informations non présentes en mémoire physique, dans une de ses étapes spécifiques le procédé permet de détecter l'ensemble des chaînes de dépendances entre verrous et unités d'exécution et délivre ensuite les informations relatives à la pile d'exécution de chaque unité d'exécution. Ces dernières informations permettent à l'opérateur de connecter un sous-ensemble de chaînes afin de reconstituer le cycle caractérisant l'interblocage.

En fait, une totale automatisation de la recherche d'un cycle ne peut être atteinte que si toutes les informations sont présentes en mémoire physique, or avec l'utilisation d'une mémoire virtuelle la probabilité que certaines informations ne soient pas stockées en mémoire physique est loin d'être nulle et dans ce cas là le mode de recherche n'est plus complètement automatique mais correspond à un mode assisté. Lorsqu'une information n'est pas présente en mémoire physique, selon le procédé, l'utilisateur se voit présenter des informations concernant la pile d'exécution et ces informations permettront alors à l'utilisateur, qui ne doit pas pour cela posséder de connaissances pointues en matière de verrous, de retrouver de manière automatique le (ou les) morceau(x) de cycle manquant lors de la recherche, la connaissance du contexte par l'utilisateur permettant alors de reconstituer dans son intégralité le cycle. L'acquis nécessaire pour cela à l'utilisateur peut se limiter à la connaissance de relations entre un certain nombre de tâches dans le système et une connaissance grossière de l'arborescence et de la spécification (fonctionnalités). La recherche de l'interblocage se fait alors en mode assisté par l'utilisateur, mais ce dernier est rendu complètement indépendant du mécanisme interne des verrous puisqu'il n'a pas besoin de savoir comment sont programmés lesdits verrous, ni quel type de verrou est concerné par l'application en question.

De cette manière, mode totalement automatique et mode assisté par l'utilisateur cohabitent, tant que les informations nécessaires sont disponibles en mémoire physique, c'est le premier mode automatique qui est opérationnel pour la recherche d'un cycle dans un graphe et dès qu'une information utile manque le mode assisté par l'utilisateur prend le relais pour la reconstitution à partir des morceaux trouvés de l'ensemble du cycle.

Une telle analyse avec détection d'interblocage peut être ensuite aisément exploitée. Les verrous et les tâches impliqués dans l'interblocage sont ainsi connus et permettent de modifier utilement une programmation. Lorsque le cycle est caractérisé, les unités d'exécution impliquées dans le cycle, les fonctions des unités d'exécution qui détiennent les verrous, les types de verrou, de même que les opérations effectuées par les unités d'exécution au moment où ces dernières ont été bloquées sont déterminées permettant ainsi de retrouver la programmation et de détecter éventuellement des violations de hiérarchie. Puis ensuite la correction des interblocages peut être effectuée par les développeurs en utilisant un analyseur d'interblocages statique.

L'analyse des interblocages selon le présent procédé a pour but essentiel de mettre en évidence un défaut du système en remontant à son origine et ceci avec le plus de précision possible de manière à le corriger dans une phase ultérieure de développement.

La description suivante au regard des dessins annexés, le tout donné à titre d'exemple non limitatif, fera bien comprendre comment l'invention peut être réalisée.

La figure 1 représente un schéma décrivant les différentes étapes d'application du procédé traditionnel d'analyse d'interblocages.

La figure 2 propose un schéma décrivant les différentes étapes d'application du procédé selon l'invention adapté à l'analyse d'interblocages pour une machine comportant un multiprocesseur symétrique et fonctionnant dans un environnement UNIX.

La figure 3 propose de plus, une adaptation de certaines étapes décrites sur le schéma de la figure 1 et montrées sur la figure 2 utilisable avec un système à mémoire virtuelle.

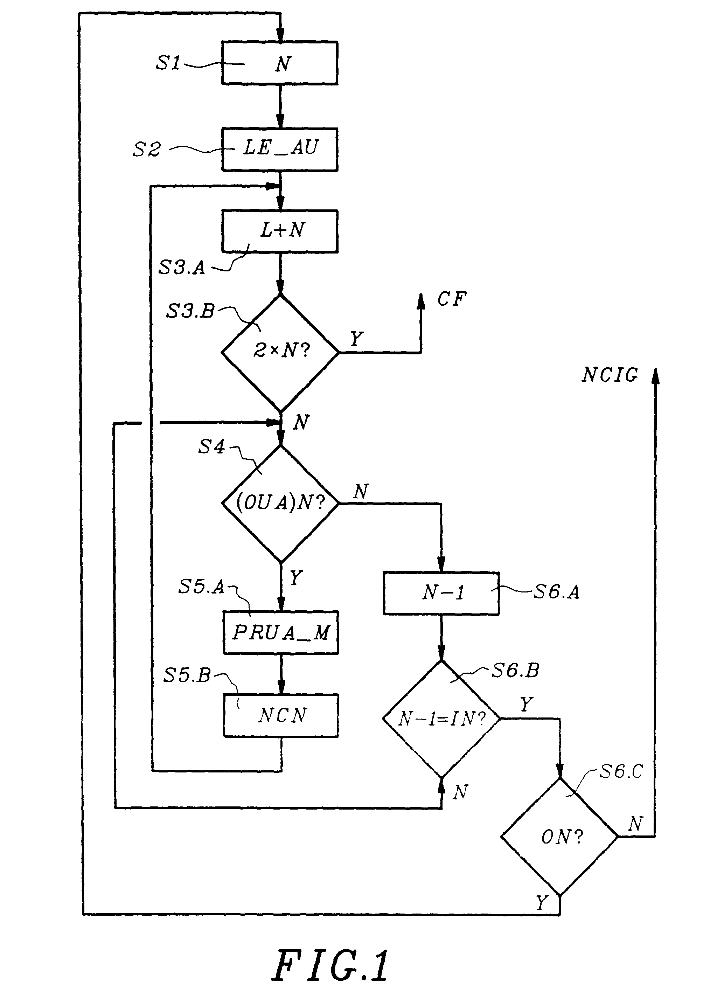

Sur la figure 1, les différentes étapes du procédé traditionnel d'analyse d'interblocages sont décrites sous la forme d'un algorithme.

Pour une meilleure appréhension de l'invention, suivent quelques précisions relativement à la terminologie employée. De manière générale, un interblocage est susceptible de se produire lorsqu'un système d'exploitation fait de l'allocation dynamique de ressources car il permet à une tâche de commencer son exécution avant d'avoir acquis toutes les ressources nécessaires. Un verrou est un exemple de mécanisme régulant l'accès aux ressources qui supportent un nombre limité d'accès concurrents. Egalement, un système peut exécuter simultanément plusieurs processus, un processus comportant une séquence d'instructions machine ainsi que les informations relatives à l'état de son exécution. Chaque processus peut être fractionné pour être exécuté par une pluralité de processeurs, la fraction du processus s'exécutant sur un processeur donné à un instant donné est appelé une unité d'exécution. Comme cela a été précédemment énoncé, le procédé traditionnel consiste à rechercher pour toute unité d'exécution bloquée sur un verrou, l'unité d'exécution qui détient le verrou, et, si cette unité d'exécution est elle-même en attente sur un autre verrou de remonter la chaîne jusqu'à trouver un cycle. Un cycle détecté dans le graphe de dépendances indique qu'il a été trouvé un interblocage impliquant les processus et les ressources dans ledit cycle, le graphe de dépendances étant ici constitué de deux familles de noeuds, d'une part les verrous et d'autre part les processus ou les unités d'exécution.

Une fois le graphe de dépendances obtenu, le procédé traditionnel décrit avec la figure 1 est appliqué. Ainsi la première étape S1 d'initialisation [N] peut être ainsi exprimée : pour tout noeud N (verrou ou unité d'exécution) du graphe, appeler les cinq étapes suivantes avec N comme point de départ. L'étape S2 correspond à l'initialisation d'une liste L vide [LE], alors que tous les arcs connectant les noeuds sont déclarés non marqués [AU]. A l'étape S3.A [L+N], le noeud courant est ajouté à la fin de la liste L, tandis qu'à l'étape S3.B [2xN ?] est posée la question : "Le noeud courant N apparaît-il deux fois dans la liste L ?" Si la réponse est oui (Y), cette double apparition démontre que le graphe contient un cycle (listé dans la liste L) et le procédé est arrête le cycle étant trouvé [CF]. Si à l'inverse la réponse est non (N), il y a passage à l'étape S4 [(OUA)N ?] où la question suivante est posée : "Existe-t-il des arcs issus du noeud courant et non marqués ?". Si la réponse est oui, l'étape suivante est l'étape S5.A [PRUA + M] au cours de laquelle est choisi au hasard un arc sortant non marqué pour être marqué, puis à l'étape S5.B [NCN], le noeud pointé par cet arc est considéré comme le nouveau noeud courant et il y a retour à l'étape S3.A. Si, par contre, la réponse à la question de l'étape S4 est non, le procédé est dans une impasse et c'est l'étape S6.A [N-1] qui permet de revenir au noeud précédent (celui qui était le noeud courant juste avant ce dernier) qui est alors considéré comme le noeud courant. A l'étape S6.B [N-1 = IN ?] une question se pose : "Le noeud est-il le noeud initial?". Si la réponse est non, il y a retour à l'étape S4, alors que si la réponse est oui, à l'étape S6.C [ON ?] une dernière question est posée : "Existe-t-il un autre noeud ?". Une réponse négative entraîne un arrêt du procédé informant qu'à partir du noeud courant, il n'existe pas de cycle dans le graphe [NCIG]. Enfin, si la réponse est oui, il y a retour à l'étape S1 pour l'analyse du ou des noeuds restants.

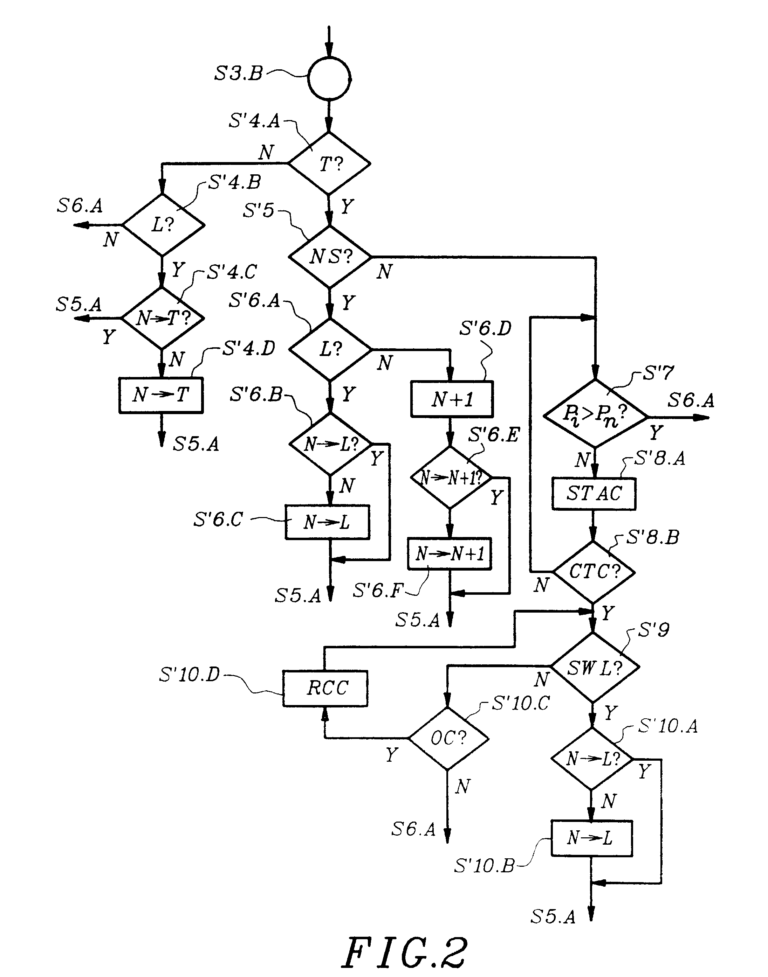

Sur la figure 2 est proposé un schéma décrivant les différentes étapes du procédé selon l'invention qui permettent d'adapter efficacement le procédé traditionnel à l'analyse d'interblocages pour une machine comportant un multiprocesseur symétrique et fonctionnant dans un environnement UNIX. Cette adaptation est avantageusement obtenue grâce à la fonction spécifique définissant les arcs connectant les unités d'exécution pour l'ensemble des processeurs aux verrous. En effet, conformément à l'idée de l'invention, le procédé est remarquable en ce qu'il utilise de manière itérative une fonction spécifique qui permet de passer d'une unité d'exécution et de l'ensemble des processeurs vers tout type de verrous en parcourant l'une après l'autre les unités d'exécution pour reconstituer élément par élément un interblocage et donc un cycle.

Pour cela, l'étape S4 est remplacée par les étapes décrites ci-après permettant de mettre en oeuvre ladite fonction spécifique. Les étapes S1 à S3 (S3.A + S3.B), S5 (S5.A + S5.B) et S6 (S6.A + S6.B + S6.C) du procédé traditionnel sont conservées.

Ainsi, dans le présent procédé selon l'invention, à une réponse négative à la question posée à l'étape S3.B de la méthode traditionnelle correspond l'étape S'4.A au cours de laquelle est posée la question [T ?] : "Le noeud courant est-il du type unité d'exécution ?". Si la réponse est négative, la question suivante est posée à l'étape S'4.B [L ?] : "Le noeud courant est-il un verrou ?". Si la réponse est négative, le procédé est dans une impasse et il y a passage à l'étape S6.A du procédé traditionnel (voir figure 1) pour un traitement équivalent (S6.A, S6.B, S6.C). Si au contraire le noeud courant est un verrou, cela signifie que l'unité d'exécution T est l'unité détentrice du verrou L ou bien l'unité interrompue par un traitant d'interruption détenteur du verrou L. Dans ce cas, l'étape S'4.C suit avec la question [N → T ?] : "Existe-t-il un arc connectant le noeud courant N vers l'unité d'exécution T ?". Une réponse affirmative entraîne le passage à l'étape S5.A du procédé traditionnel. Une réponse négative est suivie de l'étape S'4.D où il est défini un arc du noeud courant N vers l'unité T [N → T] puis du passage à l'étape S5.A du procédé traditionnel.

A l'inverse, lorsque la réponse à la question [T ?] de l'étape S'4.A est affirmative la question suivante est posée à l'étape S'5 [NS ?] : "L'unité courante T est-elle endormie (en attente) ?". Une réponse affirmative entraîne l'étape S'6.A où la question suivante est posée [L ?] : "L'évènement attendu est-il un verrou ?". Si la réponse est oui alors à l'étape S'6.B est posée la question [N → L ?] : "Existe-t-il un arc connectant le noeud courant N au verrou L ?". Si la réponse est oui, il y a passage à l'étape S5.A du procédé traditionnel, si la réponse est non c'est l'étape S'6.C où il est défini un arc du noeud courant N vers le verrou L [N → L], l'étape S'6.C étant suivie du passage à l'étape S5.A du procédé traditionnel.

En outre, une réponse négative à la question [L ?] de l'étape S'6.A signifie que l'attente est relative à un évènement autre qu'un verrou et alors à l'étape S'6.D, il est ajouté un noeud de type neutre [N + 1], puis à l'étape S'6.E est posée la question [N → N + 1 ?] : "Existe-t-il un arc connectant le noeud courant précédent N au nouveau noeud courant N + 1?". Une réponse affirmative est suivie du passage à l'étape S5.A du procédé traditionnel, alors qu'une réponse négative entraîne l'étape S'6.F où un arc est défini connectant le noeud N au nouveau noeud courant N + 1 [N → N + 1], puis il y a passage à l'étape S5.A du procédé traditionnel. Il est à préciser qu'un noeud de type neutre correspond à tout évènement qui n'est ni un verrou ni une unité d'exécution et qui pourrait être par exemple un signal attendu par une unité d'exécution.

Une réponse négative à la question de l'étape S'5 signifie que l'unité d'exécution courante est active. Tous les processeurs doivent être parcourus de Po à Pn c'est l'étape S'7 où une question est posée : "L'ensemble des processeurs a-t-il été parcouru?" [Pi > Pn ?]. Si oui, il y a passage à l'étape S6.A du procédé traditionnel, le cycle de dépendance étant obligatoirement ailleurs s'il existe, l'unité d'exécution est par conséquent sans dépendance. Si la réponse est non, l'étape suivante est S'8.A au cours de laquelle l'empilement d'exécution du processeur courant Pi est parcouru jusqu'au dernier contexte d'exécution [STAC], puis à l'étape S'8.B est posée la question suivante: "Le contexte d'exécution pointé est-il celui de l'unité courante ?" [CTC ?]. A une réponse négative correspond un retour à l'étape S'7. A l'inverse, une réponse affirmative signifie que le processeur sur lequel l'unité d'exécution est active est trouvé, ce qui entraîne l'étape S'9 et la question : "L'empilement d'exécution du contexte courant du processeur courant est-il en attente d'un verrou ?" [SWL ?]. Une réponse affirmative conduit à l'étape S'10.A [N → L?] où la question suivante est posée : "Existe-t-il un arc connectant le noeud courant N au verrou L ?". Si la réponse est oui il y a passage à l'étape S5.A du procédé traditionnel. Si la réponse est non, l'appel courant de la pile d'exécution associée au contexte courant étant une demande de verrou, à l'étape S'10.B [N → L] il est alors tracé un arc du noeud courant N vers le verrou L demandé par l'appel courant, puis il y a retour à l'étape S5.A du procédé traditionnel. Dans le cas contraire, la réponse négative à la question [SWL ?] de l'étape S'9 entraîne une autre question [OC ?] à l'étape S'10.C : "Existe-t-il un autre contexte d'exécution ?". S'il existe un autre contexte qui suit, ce dernier est redéfini comme le contexte courant, c'est l'étape S'10.D [RCC], puis il y a retour à l'étape S'9. Si à l'inverse, la réponse à la question de l'étape S'10.C est non, il n'y a pas d'autre contexte, cela signifie que cette unité d'exécution n'est pas bloquée par un verrou ce qui entraîne le passage à l'étape S6 du procédé traditionnel décrit avec la figure 1.

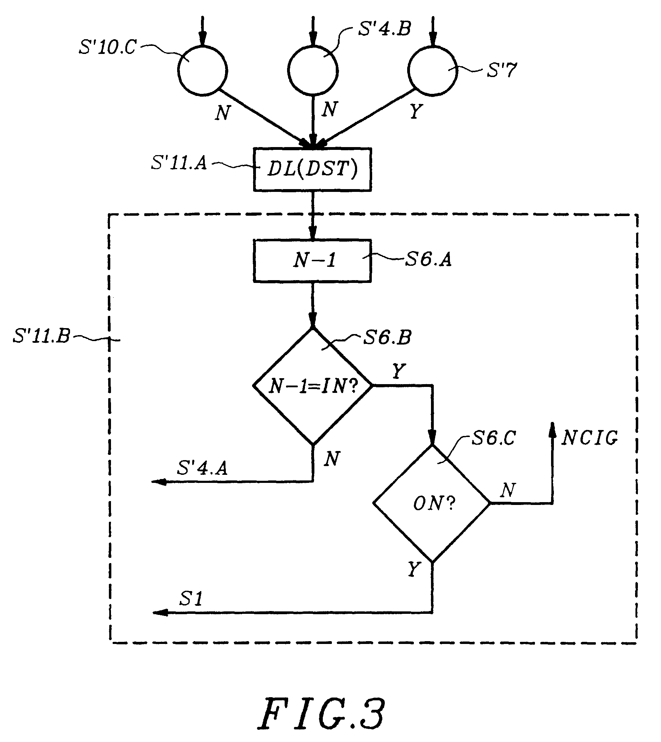

Sur la figure 3 est proposé une adaptation de certaines étapes décrites sur le schéma de la figure 1 et indiquées également sur la figure 2, adaptation qui autorise une utilisation efficace du procédé selon l'invention appliqué à un système d'exploitation à mémoire virtuelle.

En effet, comme cela a été dit précédemment, le procédé traditionnel décrit avec la figure 1, se révèlera peu efficace pour analyser un interblocage dans un système d'exploitation à mémoire virtuelle. Une recherche de cycle ne peut aboutir qu'à condition de disposer de toutes les informations utiles en mémoire physique, or certaines informations permettant la détection du cycle peuvent, à un instant donné, ne pas se trouver en mémoire physique mais en mémoire virtuelle. Dans ces conditions, le graphe de dépendances complet ne peut être constitué si certains arcs et certains noeuds (unité d'exécution ou verrou) ne sont pas repérés en mémoire physique.

Pour avantageusement donner à l'utilisateur la possibilité de résoudre ce problème, le présent procédé est prévu pour détecter l'ensemble des chaînes de dépendance entre verrous et unités d'exécution, les informations relatives à la pile d'exécution de chaque unité d'exécution sont également délivrées, ces informations autorisant alors l'utilisateur à agencer l'ensemble des chaînes de manière à reconstituer le cycle déterminant l'interblocage.

Dans ce but, l'étape S6 (S6.A, S6.B, S6.C) du procédé traditionnel (voir figures 1 et 2) est modifiée de la manière suivante. Une réponse négative aux questions posées à l'étape S'4.B [L ?] et à l'étape S'10.C [OC ?] de même qu'une réponse positive à la question [Pi > Pn ?] de l'étape S'7 est suivie de l'étape S'11.A qui est relative à l'affichage de la liste L [DL (DST)] qui peut être ainsi exploitée par l'utilisateur, en particulier l'empilement d'exécution associé à toutes les unités d'exécution rencontrées dans cette liste est décodé. L'étape S'11.B suivante est identique à l'étape S6 (S6.A, S6.B, S6.C) du procédé traditionnel.

Selon une première application préférée, le procédé conforme à l'invention peut être mis en oeuvre par un outil de mise au point ayant accès en consultation à toute la mémoire physique.

Selon une seconde application préférée, le procédé conforme à l'invention peut être mis en oeuvre par un outil d'analyse de vidages mémoire.

De cette manière une machine qui est en exploitation ou en phase de test peut avantageusement bénéficier de l'application du présent procédé. Lorsque des interblocages surviennent, ladite machine peut devenir quasiment indisponible, dans ce cas il peut être fait appel à un outil, soit de manière interactive c'est alors un outil de mise au point qui est utilisé pour mettre en oeuvre le procédé, soit de manière rétrospective en faisant appel à un outil d'analyse de vidages de mémoire et dans ce cas il est pris une image de la mémoire de la machine dont l'état est analysé par un outil d'analyse de vidages mémoire soit sur une autre machine, soit sur la même machine qui a été relancée.

En conclusion, le procédé selon l'invention apporte d'une part une généricité pour traiter des problèmes posés par l'utilisation d'un multiprocesseur symétrique et d'autre part l'assistance nécessaire à un utilisateur lorsque ce procédé est exploité dans un système d'exploitation à mémoire virtuelle. Les pièges habituels posés à l'utilisateur peuvent être ainsi aisément décelés et évités, par exemple lorsqu'un interblocage n'est pas dû spécifiquement à des verrous qui peuvent être non bloquants pour des unités d'exécution mais également à d'autres évènements tels que des verrous attendus par des traitants d'interruptions. Pour cela l'utilisateur ne doit pas nécessairement être, comme c'était le cas auparavant, un spécialiste des noyaux de systèmes d'exploitation connaissant parfaitement les structures du noyau pour savoir remonter là où sont placées les informations, mais seulement une personne ayant la connaissance des relations entre un certain nombre de tâches et une connaissance relativement grossière de l'arborescence et des fonctionnalités données dans la spécification. Moyennant cette connaissance le procédé est parfaitement efficace car grâce à sa fonction spécifique qui permet de passer d'une unité d'exécution et d'un ensemble de processeurs à tout type de verrous simple ou complexe, il fournit à l'utilisateur soit directement les raisons de l'interblocage soit un ensemble de maillons d'une chaîne lui permettant de remonter aisément jusqu'à l'interblocage. Il va de soi que le présent procédé qui permet une recherche efficace relativement aux unités d'exécution est tout aussi efficace concernant les processus, une unité d'exécution étant comme cela a été précisé ci-avant une fraction d'un processus et donc permettant une approche plus fine du processus.

## Revendications

1. Procédé d'analyse d'interblocages dans un système d'exploitation d'une machine comportant un ensemble de processeurs formant un multiprocesseur symétrique exécutant un programme dans un environnement UNIX, chacun des processeurs exécutant une fraction de séquence d'instruction de programme constituant une unité d'exécution, caractérisé en ce que le procédé exécute de manjère itérative une fonction spécifique pour établir au moins un arc d'un graphe de dépendance connectant une unité d'exécution d'un des processeurs du multiprocesseur symétrique à tout type de verrou, et en ce que le procédé comporte :
- une recherche et une identification sur tous les processeurs du multiprocesseur symétrique d'une unité d'exécution en attente bloquée sur un verrou ou attendant un signal détenteur d'un élément de la machine,
- une recherche et identification de l'unité d'exécution détentrice qui détient le verrou ou le signal détenteur de l'élément de la machine, et
- lorsque l'unité d'exécution détentrice est elle-même en attente sur un autre verrou, répétition des étapes précédentes du procédé à travers une chaîne d'arcs reliant entre eux les unités d'exécution et les verrous pour remonter la chaîne de dépendance, jusqu'à ce qu'un cycle soit identifié, étapes dans lesquelles la fonction spécifique permet de reconstituer élément par élément un interblocage et donc un cycle de dépendance.

2. Procédé d'analyse d'interblocages selon la revendication 1, caractérisé en ce que, lorsque la machine comprend en plus une mémoire virtuelle, ceci impliquant que toutes les informations utiles pour détecter le cycle ne se trouvent pas en mémoire physique, et en ce que, après avoir détecté l'ensemble des chaînes de dépendance entre verrou et unités d'exécution, les informations relatives à une pile d'exécution du processeur associé à chaque unité d'exécution et l'indication du contenu de la mémoire virtuelle sont également délivrées, ces informations permettant alors à un utilisateur d'agencer manuellement l'ensemble des chaînes de manière à reconstituer un cycle de dépendance pour déterminer l'interblocage.

3. Procédé d'analyse d'interblocages selon la revendication 2, caractérisé en ce que la fonction spécifique est mise en oeuvre par un dispositif de diagnostic selon les étapes suivantes :
1. rechercher dans la mémoire physique de la machine le noeud courant sur une liste par le dispositif de diagnostique
- (S'4.A) si le noeud courant est une unité d'exécution, passage à l'étape 2,
- (S'4.B) si le noeud courant est un verrou, le verrou est détenu par une unité d'exécution détentrice et un arc est créé (S'4.C, S'4.D) sur la liste pour connecter le verrou détenu à cette unité d'exécution détentrice,
- si le noeud courant n'est ni une unité d'exécution, ni un verrou, le procédé est dans une impasse de laquelle il peut être sortie en appliquant une partie de procédés traditionnels d'analyse d'interblocages (S6.A, S6.B, S6.C) ;
2. si le noeud courant sur la liste du dispositif est une unité d'exécution, identifier en recherchant sur la mémoire physique si l'unité courante est en attente (S'5),
- si oui passage à l'étape 3 (S'6.A)
- sinon passage à l'étape 4 (S'7) ;
3. si l'unité d'exécution courante est en attente, identifier dans la mémoire physique si l'événement attendu par l'unité d'exécution courante est un verrou :
- si oui, tracer un arc sur la liste vers le verrou attendu (S'6.B) et retourner à l'étape 1,
- sinon l'attente est due à un autre événement, ajouter (S'6.D) alors un noeud de type neutre à la liste du dispositif de diagnostic, et tracer sur la liste un arc vers ce nouveau noeud s'il n'existe pas déjà (S'6.E ou S'6.F), puis une partie de procédés traditionnels d'analyse d'interblocages est appliquée (S5.A) ;
4. si l'unité d'exécution est active pour tout processeur de la machine, aller à l'étape 5 (S'8.A), à moins que tous les processeurs aient été parcourus par le présent procédé, l'unité d'exécution est alors en attente d'une ressource processeur, et le cycle de dépendance est obligatoirement ailleurs s'il existe, de sorte que l'unité d'exécution courante est sans dépendance ;
5. si l'unité d'exécution est active pour tout processeur de la machine tel que déterminé par l'analyse de la mémoire physique, alors la pile d'exécution du processeur courant est parcouru (S'8.B) jusqu'au dernier contexte d'exécution, et si ce contexte d'exécution est celui de l'unité d'exécution courante, passage à l'étape 6 (S'9), sinon aller à l'étape 4 et chercher sur un autre processeur, ceci jusqu'au dernier processeur ;
6. si le processeur sur lequel l'unité d'exécution courante est active a été trouvé, rechercher (S'10.A) dans la mémoire physique si la pile d'exécution est en attente d'un verrou, et de tout contexte d'exécution de la pile d'exécution du processeur, passage à l'étape 7 ; et
7. si la pile d'exécution associée au contexte d'exécution courant est en attente de verrou, tracer (S'10.B) un arc dans la liste du dispositif de diagnostic, s'il n'existe pas déjà, de l'unité d'exécution courante vers le verrou demandé par l'appel courant, et sinon (S'10.C), s'il existe un contexte d'exécution suivant, lui appliquer les étapes 6 et 7, même s'il n'existe pas d'autres contextes suivants, l'unité d'exécution courante n'est pas bloquée par un verrou et le procédé est dans une impasse de laquelle il peut être sorti en appliquant une partie des procédés traditionnels connus d'analyse d'interblocages (S6).

4. Procédé d'analyse d'interblocages selon la revendication 3, caractérisé en ce que, lorsque le cycle de dépendance ne peut être reconstitué du fait que toutes les informations utiles ne se trouvent pas en mémoire physique, après avoir détecté l'ensemble des chaînes de dépendance entre unités d'exécution et verrous, dans une première itération, la liste des unités d'exécution et des verrous avec leurs dépendances est affichée pour être exploitée par l'utilisateur, en particulier, la pile d'exécution du processeur associé à toutes les unités d'exécution rencontrées dans cette liste est décodée, puis dans une seconde itération, les procédés connus mentionnés à l'étape 7 sont appliqués.

5. Procédé selon l'une des revendications précédentes, caractérisé en ce qu'un outil de mise au point ayant accès à l'ensemble de la mémoire physique est utilisé pour avoir accès aux informations contenues dans la mémoire, les informations contenues dans la mémoire permettant la mise en oeuvre du procédé.

6. Procédé selon l'une des revendications précédentes, caractérisé en ce qu'un outil d'analyse de vidage de mémoire est utilisé pour prendre une image de la mémoire de la machine, les informations contenues dans la mémoire permettant la mise en oeuvre du procédé.

7. Procédé selon l'une des revendications précédentes, caractérisé en ce que l'élément de la machine est un traitant d'interruption et le signal détenteur est un signal d'interruption.

8. Utilisation du procédé selon l'une des revendications précédentes pour la mise en oeuvre de l'analyse d'interblocages dans un système d'exploitation entre processus et ressource.

## Patentansprüche

1. Verfahren zur Analyse gegenseitiger Blockierungen in einem Betriebssystem einer Maschine, die eine Gesamtheit von Prozessoren enthält, die einen symmetrischen Multiprozessor bilden, der ein Programm in einer UNIX-Umgebung ausführt, wobei jeder der Prozessoren einen Bruchteil der eine Ausführungseinheit bildenden Programmbefehlsfolge ausführt, dadurch gekennzeichnet, daß das Verfahren eine spezifische Funktion iterativ ausführt, um wenigstens eine Verbindungslinie eines Abhängigkeitsgraphens herzustellen, die eine Ausführungseinheit eines der Prozessoren des symmetrischen Multiprozessors mit irgendeinem Typ einer Sperre verbindet, und daß das Verfahren enthält:
- eine Suche und eine Identifizierung einer wartenden Ausführungseinheit, die an einer Sperre blockiert ist oder auf ein ein Element der Maschine sperrendes Signal wartet, in sämtlichen Prozessoren des symmetrischen Multiprozessors,
- eine Suche und eine Identifizierung der sperrenden Ausführungseinheit, die die Sperre oder das das Element der Maschine sperrende Signal setzt, und
- dann, wenn die sperrende Ausführungseinheit selbst auf eine andere Sperre wartet, Wiederholen der vorangehenden Schritte des Verfahrens durch eine Kette von Verbindungslinien, die die Ausführungseinheiten und die Sperren miteinander verbinden, um die Abhängigkeitskette hochzusteigen, bis ein Zyklus identifiziert wird, wobei in diesen Schritten die spezifische Funktion die elementweise Wiederherstellung einer gegenseitigen Blockierung und daher eines Abhängigkeitszyklus ermöglicht.

2. Verfahren zur Analyse gegenseitiger Blockierungen nach Anspruch 1, dadurch gekennzeichnet, daß, wenn die Maschine außerdem einen virtuellen Speicher enthält, wobei dies bedeutet, daß sich alle Nutzinformationen für die Erfassung des Zyklus nicht im physischen Speicher befinden, und nachdem die Gesamtheit der Abhängigkeitsketten zwischen der Sperre und den Ausführungseinheiten erfaßt worden ist, die einen Ausführungsstapel des jeder Ausführungseinheit zugeordneten Prozessors betreffenden Informationen sowie die Angabe des Inhalts des virtuellen Speichers ebenfalls geliefert werden, wobei diese Informationen dann einem Anwender ermöglichen, manuell die Gesamtheit der Ketten anzuordnen, derart, daß ein Abhängigkeitszyklus für die Bestimmung der gegenseitigen Blockierung wiederhergestellt wird.

3. Verfahren zur Analyse gegenseitiger Blockierungen nach Anspruch 2, dadurch gekennzeichnet, daß die spezifische Funktion von einer Diagnosevorrichtung gemäß den folgenden Schritten ausgeführt wird:
1. Durchsuchen des physischen Speichers der Maschine auf den momentanen Knoten in einer Liste durch die Diagnosevorrichtung,
- (S'4.A) falls der momentane Knoten eine Ausführungseinheit ist, wird zum Schritt 2 übergegangen,
- (S'4.B) falls der momentane Knoten eine Sperre ist, wird die Sperre durch eine sperrende Ausführungseinheit gesetzt und wird eine Verbindungslinie in der Liste erzeugt (S'4.C, S'4.D), die die gesetzte Sperre mit dieser sperrenden Ausführungseinheit verbindet,
- falls der momentane Knoten weder eine Ausführungseinheit noch eine Sperre ist, befindet sich das Verfahren in einer Sackgasse, aus der es austreten kann, indem ein Teil herkömmlicher Verfahren zur Analyse von gegenseitigen Blockierungen angewendet wird (S6.A, S6.B, S6.C);
2. falls der momentane Knoten in der Liste der Vorrichtung eine Ausführungseinheit ist, Identifizieren durch Suchen im physischen Speicher, ob die momentane Einheit wartet (S'5),
- falls ja, Übergang zum Schritt 3 (S'6.A),
- falls nein, Übergang zum Schritt 4 (S'7);
3. falls die momentane Ausführungseinheit wartet, Identifizieren im physischen Speicher, ob das von der momentanen Ausführungseinheit erwartete Ereignis eine Sperre ist;
- falls ja, Ziehen einer Verbindungslinie in der Liste zu der erwarteten Sperre (S'6.B) und Zurückkehren zum Schritt 1,
- falls nein, ist das Warten durch ein anderes Ereignis bedingt, wobei dann zur Liste der Diagnosevorrichtung ein Knoten des neutralen Typs hinzugefügt wird (S'6.D) und in der Liste eine Verbindungslinie zu diesem neuen Knoten gezogen wird, falls er nicht bereits existiert (S'6.E oder S'6.F), woraufhin ein Teil herkömmlicher Verfahren zur Analyse gegenseitiger Blockierungen angewendet wird (S5.A);
4. falls eine Ausführungseinheit für jeden Prozessor der Maschine aktiv ist, Übergang zum Schritt 5 (S'8.A), es sei denn, daß sämtliche Prozessoren vom momentanen Verfahren durchlaufen worden sind, wobei die Ausführungseinheit dann auf ein Prozessorbetriebsmittel wartet und der Abhängigkeitszyklus zwangsläufig anderswo vorhanden ist, falls er vorhanden ist, so daß die momentane Ausführungseinheit ohne Abhängigkeit ist;
5. falls die Ausführungseinheit für jeden Prozessor der Maschine aktiv ist, wie durch Analyse des physischen Speichers festgestellt wird, wird der Ausführungsstapel des momentanen Prozessors bis zum letzten Ausführungskontext durchlaufen (S'8.B), wobei dann, wenn dieser Ausführungskontext derjenige der momentanen Ausführungseinheit ist, zum Schritt 6 übergegangen wird (S'9), andernfalls wird zum Schritt 4 übergegangen und ein weiterer Prozessor gesucht, und dies bis zum letzten Prozessor;
6. falls der Prozessor, in dem die momentane Ausführungseinheit aktiv ist, gefunden worden ist, Suchen (S'10.A) im physischen Speicher, ob der Ausführungsstapel auf eine Sperre wartet, und von jedem Ausführungskontext des Ausführungsstapels des Prozessors Übergang zum Schritt 7; und
7. falls der Ausführungsstapel, der dem momentanen Ausführungskontext zugeordnet ist, auf eine Sperre wartet, Ziehen (S'10.B) einer Verbindungslinie in der Liste der Diagnosevorrichtung, falls sie nicht bereits vorhanden ist, von der momentanen Ausführungseinheit zu der durch den momentanen Aufruf angeforderten Sperre, andernfalls (S'10.C), falls ein nachfolgender Ausführungskontext vorhanden ist, Anwenden der Schritte 6 und 7 auf ihn, selbst wenn keine weiteren folgenden Kontexte vorhanden sind, wenn die momentane Ausführungseinheit nicht durch eine Sperre blockiert ist und wenn das Verfahren sich in einer Sackgasse befindet, aus der es austreten kann, indem ein Teil bekannter herkömmlicher Verfahren zur Analyse gegenseitiger Blockierungen angewendet wird (S6).

4. Verfahren zur Analyse gegenseitiger Blockierungen nach Anspruch 3, dadurch gekennzeichnet, daß dann, wenn der Abhängigkeitszyklus aufgrund der Tatsache, daß sich alle Nutzinformationen nicht im physischen Speicher befinden, nicht wiederhergestellt werden kann, nachdem die Gesamtheit der Abhängigkeitsketten zwischen Ausführungseinheiten und Sperren erfaßt worden ist, in einer ersten Iteration die Liste von Ausführungseinheiten und von Sperren mit ihren Abhängigkeiten angezeigt wird, um vom Anwender ausgewertet zu werden, insbesondere wird der Ausführungsstapel des Prozessors, dem sämtliche Ausführungseinheiten zugeordnet sind, die in dieser Liste angetroffen werden, decodiert, woraufhin in einer zweiten Iteration die im Schritt 7 erwähnten bekannten Verfahren angewendet werden.

5. Verfahren nach einem der vorangehenden Ansprüche, dadurch gekennzeichnet, daß ein Aktualisierungswerkzeug, das Zugriff auf den gesamten physischen Speicher hat, verwendet wird, um Zugriff auf die in dem Speicher enthaltenen Informationen zu haben, wobei die in dem Speicher enthaltenen Informationen die Ausführung des Verfahrens ermöglichen.

6. Verfahren nach einem der vorangehenden Ansprüche, dadurch gekennzeichnet, daß ein Werkzeug zur Analyse eines Speicherauszugs verwendet wird, um ein Bild des Speichers der Maschine herzustellen, wobei die in dem Speicher enthaltenen Informationen die Ausführung des Verfahrens ermöglichen.

7. Verfahren nach einem der vorangehenden Ansprüche, dadurch gekennzeichnet, daß das Element der Maschine eine Unterbrechungsverarbeitung ist und daß das Sperrsignal ein Unterbrechungssignal ist.

8. Verwendung des Verfahrens nach einem der vorangehenden Ansprüche zur Ausführung der Analyse gegenseitiger Blockierungen in einem Betriebssystem zwischen Prozeß- und Betriebsmitteln.

## Claims

1. Method for analysing deadlocks in an operating system of a machine comprising a set of processors forming a symmetrical multiprocessor executing a program in a UNIX environment, each of the processors executing a program instruction sequence fraction constituting an execution unit, characterised in that the method executes iteratively a specific function in order to establish at least one arc of a dependence graph connecting an execution unit of one of the processors of the symmetrical multiprocessor to any type of lock, and in that the method comprises:
- a search and an identification on all the processors of the symmetrical multiprocessor of an execution unit on stand-by locked on a lock or waiting for a holding signal of an element of the machine,
- a search and identification of the holding execution unit that holds the lock or the holding signal of the element of the machine, and
- when the holding execution unit is itself on stand-by on another lock, repetition of the previous steps of the method through a chain of arcs connecting together the execution units and the locks so as to go up the chain of dependence, until a cycle is identified, in which steps the specific function makes it possible to reconstitute, element by element, a deadlock and therefore a dependence cycle.

2. Method for analysing deadlocks according to Claim 1, characterised in that, when the machine also comprises a virtual memory, this meaning that all the necessary information for detecting the cycle is not located in the physical memory, and in that, after having detected all the dependence chains between lock and execution units, the information relating to an execution stack of the processor associated with each execution unit and the indication of the content of the virtual memory are also supplied, this information then allowing a user to arrange manually the set of chains so as to reconstitute a dependence cycle in order to determine the deadlock.

3. Method for analysing deadlocks according to Claim 2, characterised in that the specific function is implemented by a diagnostic device according to the following steps:
1. searching in the physical memory of the machine for the current node from a list by the diagnostic device
- (S'4.A) if the current node is an execution unit, go to step 2,
- (S'4.B) if the current node is a lock, the lock is held by a holding execution unit and an arc is created (S'4.C, S'4.D) on the list to connect the lock held to that holding execution unit,
- if the current node is neither an execution unit nor a lock the method is in an impasse, from which it can be removed by applying a part of traditional deadlock-analysis methods (S6.A, S6.B, S6.C);
2. if the current node on the list of the device is an execution unit, identify by searching in the physical memory whether the current unit is on stand-by (S'5),
- if yes, go to step 3 (S'6.A)
- if no, go to step 4 (S'7);
3. if the current execution unit is on stand-by, identify in the physical memory, whether the event awaited by the current execution unit is a lock:
- if yes, draw an arc on the list towards the lock awaited (S'6.B) and go back to step 1,
- if no, the waiting is due to another event, add (S'6.D) then a node of a neutral type to the list of the diagnostic device, and draw on the list an arc towards this new node if it does not already exist (S'6.E or S'6.F), then a part of traditional deadlock analysis methods is applied (S5.A) ;
4. if the execution unit is active for any processor of the machine, go to step 5 (S'8.A), unless all the processors have been scanned by the present method, the execution unit is then awaiting a processor resource, and the dependence cycle is necessarily elsewhere if it exists, so that the current execution unit has no dependence;
5. if the execution unit is active for any processor of the machine as determined by the analysis of the physical memory, then the execution stack of the current processor is scanned (S'8.B) until the last execution context, and if this execution context is that of the current execution unit, go to step 6 (S'9), otherwise go to step 4 and search on another processor, until the last processor;
6. if the processor on which the current execution unit is active has been found, search (S'10.A) in the physical memory for whether the execution stack is awaiting a lock, and any execution context of the execution stack of the processor, go to step 7; and
7. if the execution stack associated with the current execution context is awaiting a lock, draw (S'10.B) an arc in the list of the diagnostic device, if it does not already exist, of the current execution unit towards the lock requested by the current call, and if not (S'10.C), if there is a subsequent execution context, apply thereto steps 6 and 7, even if there are no subsequent contexts, the current execution unit is not locked by a lock and the method is in an impasse from which it can be removed by applying a part of the known traditional deadlock analysis methods (S6).

4. Method for analysing deadlocks according to Claim 3, characterised in that, when the dependence cycle cannot be reconstituted because of the fact that all the necessary information is not in the physical memory, after having detected all the dependence chains between execution units and locks, in a first iteration, the list of the execution units and the locks with their dependences is displayed so as to be used by the user, in particular, the execution stack of the processor associated with all the execution units encountered in this list is decoded, then in a second iteration the known methods mentioned in step 7 are applied.

5. Method according to one of the preceding claims, characterised in that a development tool having access to the whole physical memory is used so as to have access to the information contained in the memory, the information contained in the memory making it possible to implement the method.

6. Method according to one of the preceding claims, characterised in that an analysis tool for emptying memory is used for taking an image of the memory of the machine, the information contained in the memory allowing the method to be implemented.

7. Method according to one of the preceding claims, characterised in that the element of the machine is an interrupt processor and the holding signal is an interrupt signal.

8. Use of the method according to one of the preceding claims in order to implement the analysis of deadlocks in an operating system between process and resource.
